# EUROPEAN PATENT APPLICATION

(11) **EP 2 965 789 A1**
(43) Date of publication of application: **13.01.2016**
(21) Application number: 15176540.1
(22) Date of filing: 13.07.2015
(51) Int. Cl.: A63B 49/02, A63B 53/10, A63B 53/12, A63B 59/00, B63B 15/00, A63B 69/06, B62K 19/00, B63B 35/79, A45B 9/00

(54) **SPORT EQUIPMENT COMPRISING REINFORCED TUBULAR STRUCTURE**

(30) Priority: 11.07.2014 US 201414328928
(71) Applicant: NOXI s.r.l., 30172 Mestre (VE) (IT)
(72) Inventor: GAZZARA, Roberto, 30172 Mestre (VE) (IT)
(74) Representative: Locas, Davide

(57) **Abstract**

A sport equipment includes a frame, comprising a hollow tubular structure and a plurality of rigid dividing elements disposed within an internal volume defined by the hollow tubular structure in separated positions along a longitudinal direction of the hollow tubular structure. The dividing elements comprises a side surface facing an internal surface of the hollow tubular structure, extend between transversally opposed portions of the internal surface and are rigidly connected to the opposed portions. The side surface contacts the internal surface of the hollow tubular structure and are connected thereto.

## Description

### Field of the invention

The invention relates to a sport equipment of the type including a frame comprising a tubular hollow structure.

### Background of the invention

Many sport equipment, such as tennis rackets, but also sticks, bats, rods, other kind of equipment, are normally subjected to stresses and forces that induce bending and twisting.

At the same time, in order to improve handling of the equipment or, more in general, performances during practice, it is desirable that these equipment are provided with structures as light as possible.

For this reason, typically, sport equipment comprises frames formed by a tubular hollow structure, often made of light materials, such as carbon based composite materials or aluminium.

Nevertheless, known tubular structures offer limited resistance to bending and twisting and this limits the performance of the sport equipment.

To this regard, it should be observed that e.g. a flexible boat oar is less efficient than a more rigid one. A tennis racquet that twists considerably on off-centre hits is less accurate than a more stable one. An ice hockey stick that bends and twists significantly when the player makes a slap shot would transmit a more accurate trajectory to the puck if the twisting were reduced and the bending more controlled.

Several attempts have been made in order to improve the ratio between weight and stiffness in sport equipment.

For example, US 2013/000687 discloses a hand-operated stick device including a gripping portion, a working member and an elongated shaft with opposite ends connecting the gripping portion and the working member. The shaft has a wall thickness and at least three ribs projected from an inner side of the shaft. The ribs extend from an end of the shaft adjacent to the gripping portion to the other end adjacent to the working member. The ribs have a width and a height both of which are greater than or equal to the wall thickness.

Nevertheless, known solution are useful in order to improve the overall stiffness of the sport equipment, but they do not provide particular performances in equipment which are subjected to torsional or, more in general, shear stresses, such as a tennis racket, an ice hockey stick, a bike frame or other similar components.

### Summary of the invention

An object of the invention is to provide a sport equipment that overcomes the above mentioned drawbacks.

Another object of the invention is to provide an improved sport equipment comprising a frame with improved performances.

A further object is to provide a sport equipment including a frame which comprises a hollow tubular structure having improved both bending and torsional strength.

According to the invention it is provided a sport equipment including a frame, wherein the frame comprises a hollow tubular structure and a plurality of rigid dividing elements disposed within an internal volume defined by the hollow tubular structure in separated positions along a longitudinal direction of the hollow tubular structure, the dividing elements comprising a side surface facing an internal surface of the hollow tubular structure. The dividing elements extends between transversally opposed portions of the internal surface and are rigidly connected to the opposed portions.

It is to be understood that the in the sport equipment according to the invention the dividing elements, contacting and connected to the internal surface of the hollow tubular structure, allow to improve both bending and torsional strength of the frame.

Furthermore, since the plurality of diving elements are separated therebetween, the improvement of the mechanical strength in the frame of the sport equipment can be achieved without excessively increasing the weight of the structure.

Also, the sport equipment according to the present invention allows to improve the performances during sport practice in all cases in which bending and/or torsional stiffness of the frame is required e.g. for improving precision or strength.

According to a preferred embodiment, at least 50% of the side surface contacts the internal surface of the hollow tubular structure and are connected thereto. This makes it possible to obtain a proper connection between the dividing elements and the internal surface of the tubular structure, while at the same time allowing passage between the portions of volume in which the dividing structure divides the hollow tubular structure. According to a different aspect, the dividing elements are substantially flat-shaped. In this manner the ratio between weight and strength of the structure can be maximized.

Preferably, the dividing elements extends transversally to the longitudinal direction. Accordingly, the effect of the dividing element can be optimized in particular when these are flat-shaped.

According to a further preferred embodiment, two or more of the dividing elements are interconnected therebetween by a connecting element. Preferably, connecting element extends substantially parallel to said longitudinal direction. Both of these features allows not only to increase the strength to both bending and torsional stresses, but also to axial one. According to a further aspect of the invention, the side surface wholly contacts the internal surface. In this manner the bending strength can be improved along any bending plane and the whole structure of the dividing element contribute to improve the torsional strength.

Preferably, the dividing elements divides the hollow tubular structure into longitudinally separated hollow portions. In this manner each portion can behave mechanically in an independent manner.

### Brief description of the drawings

These and other features and advantages of the invention will be better apparent from the following description of some exemplary and non-limitative embodiments, to be read with reference to the attached drawings, wherein:
- Figs. 1 and 1A are a front view of a tennis racket comprising a frame according to the present invention and a detail thereof partially in section showing a hollow tubular structure with a plurality of dividing elements, respectively;
- Fig. 2 is a perspective view of the hollow tubular structure of Fig. 1A;
- Figs. 3 and 3A are a perspective view and a top view, respectively, of the hollow tubular structure of Fig. 1A comprising connecting elements; and
- Figs. 4A-G are perspective views showing a method for manufacturing the hollow tubular structure of the present invention according to different embodiments;
- Figs. 5A-E are perspective views of hollow tubular structures of the sport equipment of the present invention comprising a connecting element according to various alternative embodiments;
- Figs. 6A-E are top views of the hollow tubular structures of Figs. 5A-E;
- Fig. 7-10 are perspective views of the hollow tubular structure of the sport equipment of the present invention comprising dividing element realized according to various embodiments;
- Figs. 11A-C are perspective views of hollow tubular structures of sport equipment of the present invention according to various embodiments; and
   Figs. 12A-H are perspective views with respective enlarged views thereof of examples of different sport equipment comprising the hollow tubular structure according to the present invention.

### Detailed description of the invention

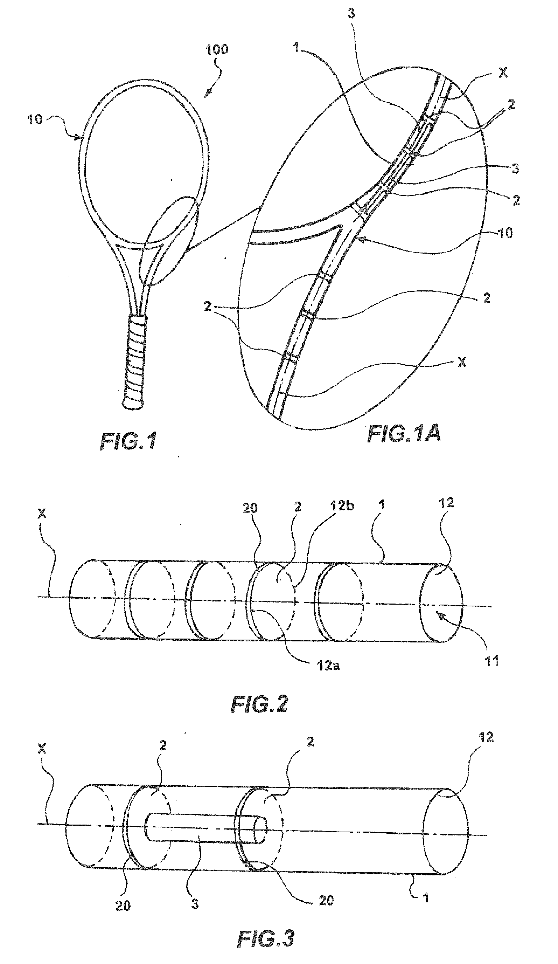

With reference initially to Fig. 1, a sport equipment according to the present invention is shown globally with the reference number 100.

According to the present embodiment, the sport equipment is represented by a tennis racquet. Nevertheless, it should be noted that the prevent invention can also be applied to different sport equipment with tubular structure, such as sticks, bats, pools, rods, shafts, racquets, handles, tackles, clubs, bails, oars, bike frames, forks, handle bar, seat post and other bike components, archery bows' components and sailing masts, that when normally used in the sport practice are subjected to stresses and forces that induce both bending and twisting.

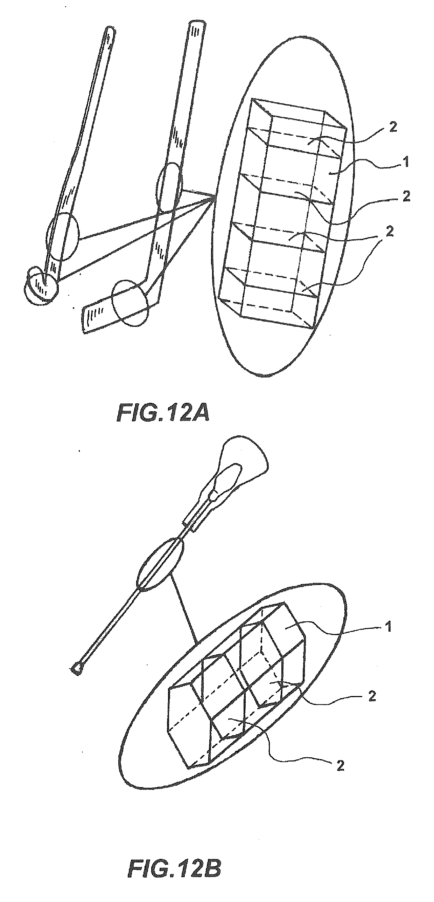

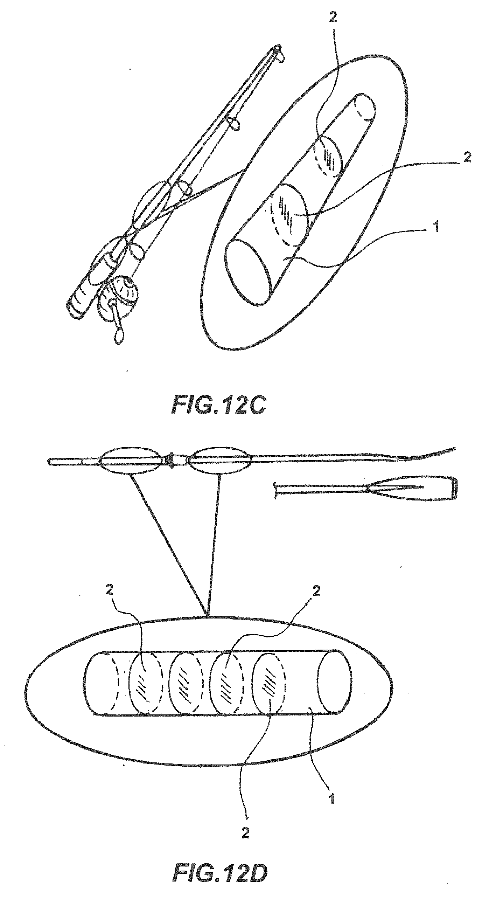

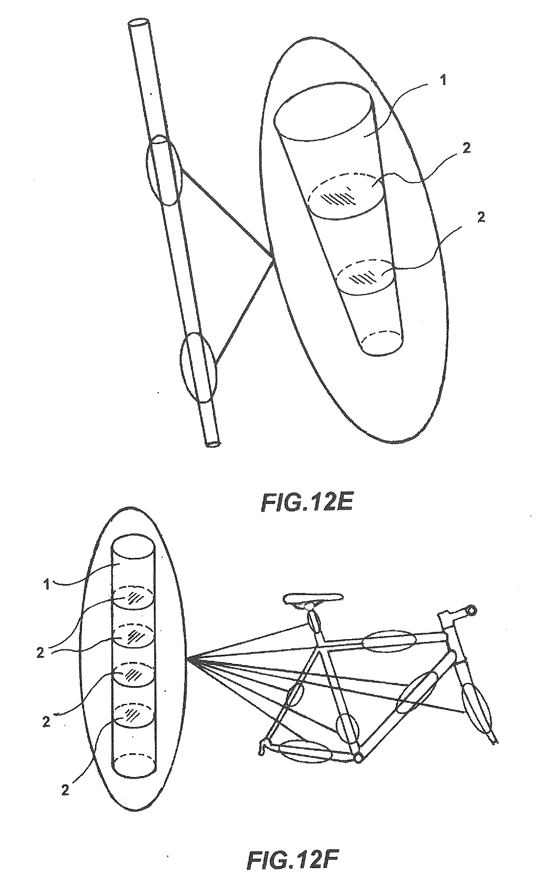

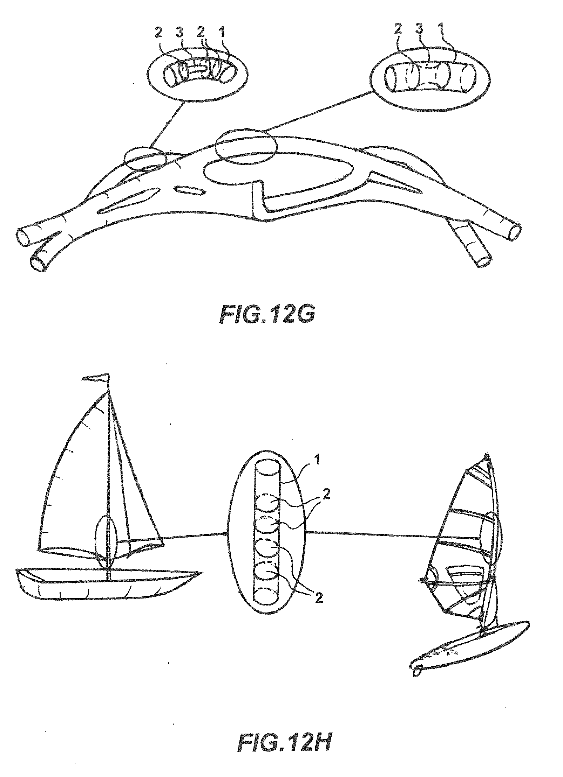

In particular, Fig. 12A shows a stick, such as an ice hockey stick, a field hockey stick or floorball stick, Fig. 12B a lacrosse stick, Fig. 12C a fishing rod, Fig. 12D a boat oar, Fig. 12E a golf shaft, Fig. 12F a bike frame, fork and components, Fig. 12G an archery bow and Fig. 12H a sailing boat and windsurf mast.

The tennis racquet or, more in general, the sport equipment 100, includes a frame 10, defining an operative portion of the sport equipment. In fact, in the present embodiment, the frame 10 supports strings, not shown in Figure, onto which ball impact during tennis practice. It will be also evident that the frame could have different function in other sport equipment, such as connecting a grip to the club head in a golf club.

As shown in Figs. 1A and 2, the frame 10 comprises a hollow tubular structure 1, defining a longitudinal direction X. In the present embodiment, the hollow tubular structure 1 has been represented with a circular cross section but it should be appreciated that in general a tennis racket has a tubular structure with a bean-like section and that, in any case, any shape useful in order to obtain a hollow tubular structure can be envisaged according to the present invention.

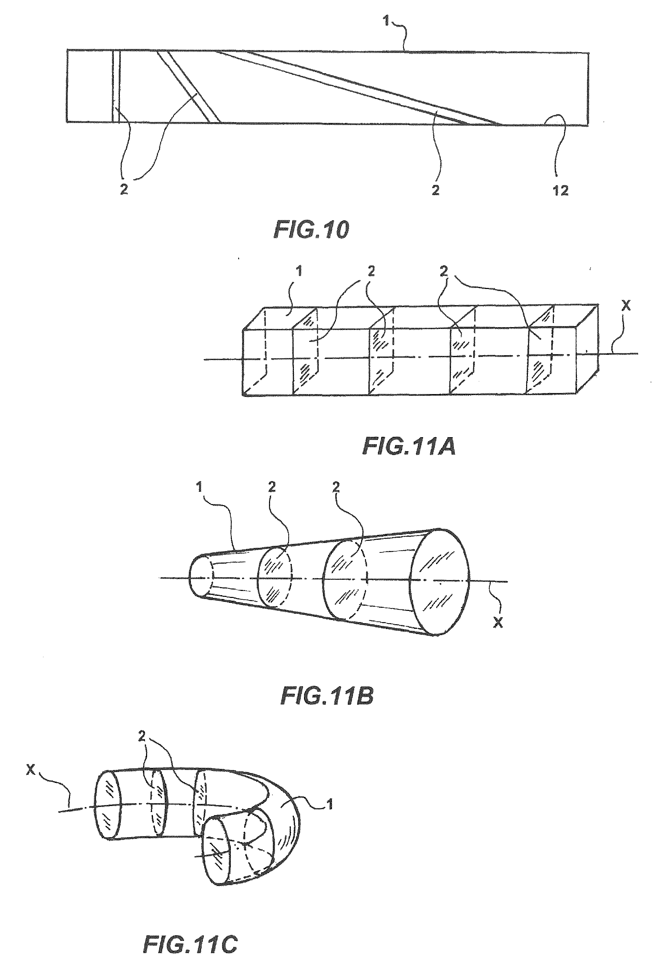

For example, as shown in Figs. 11A and 11B, the hollow tubular structure can have a polygonal cross section, e.g. a squared one as in Fig. 11A. The cross section can also be a combination of curves and rectilinear lines a may include some concave part. Preferably the tubular structure can be tapered, as shown in Fig. 11B.

It should be also noted that any shape for the hollow tubular structure can be envisaged, provided that an internal volume 11 is defined by the structure.

Furthermore, the hollow tubular structure can be formed either by a single segment or by a plurality of interconnected segments. For example, in the present embodiment, the tennis racquet frame comprises several segments, eventually having different features, such as curvature, cross section shape or thickness.

Preferably, the tubular hollow structure is made of high performance materials, such as carbon or glass fibre composite or aluminium.

With reference again to Fig. 1A and 2, the sport equipment according to the present invention further comprises a plurality of dividing elements 2 disposed within the internal volume 11 defined by the hollow tubular structure 1, as previously explained.

The diving elements 2 are made of rigid material, rigid enough in order to bear the stresses generated during the normal practice of the sport in which the equipment is applied. For example, the diving elements 2 are at least as rigid as the material of which the hollow tubular structure is made of.It should be also noted that the dividing elements can also be made of different material from the tubular structure, e.g. plastic material, while the tubular structure is made of composite or aluminum, but the characteristic of the plastic and the shape and position of the dividing elements are such that they bear torsional and/or compressive stresses higher than the tubular structure.

In any case, as will be more clear in the following, the dividing elements 2 can be either of the same material of the hollow tubular structure or of different material. Also it is not required that each diving element is made of the same material.

As can be seen from Fig. 2, the dividing elements 2 are positioned in separated positions along the longitudinal direction X of the hollow tubular structure 1. Furthermore, they are preferably positioned within the internal volume 11 in an intermediate position from the respective ends of the tubular structure 1, provided that any end is defined.

According to the present embodiment, the dividing elements 2 are formed by disk shaped elements, having an external perimeter complementary to the cross section of the hollow tubular structure 1. In this manner, when the dividing elements 2 are positioned within the internal volume of the hollow tubular structure, the side surface 20 can contact the internal surface 12 of the hollow tubular structure 1.

Preferably, the dividing elements 2 are substantially flat-shaped but, more in general, the dividing elements 2 comprises a side surface 20 facing an internal surface 12 of the hollow tubular structure 1.

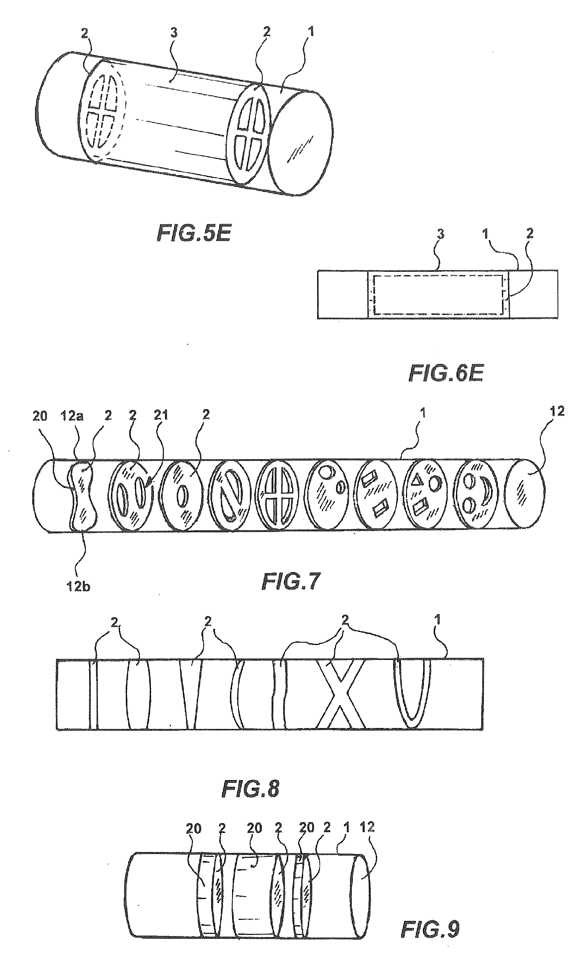

Since the dividing elements 2 contacts the internal surface 12 of the hollow tubular structure 1 it is possible to join them and form a single structure. More in general, it is not required that the perimeter of the dividing elements 2 exactly matches the cross section of the hollow tubular structure 1, since the dividing elements 2 can also be shaped as in the first example of the alternative embodiments shown in Fig. 7.

In such cases, the dividing elements 2 extend between transversally opposed portions 12A, 12B of the internal surface 1 and are rigidly connected to said opposed portions 12A, 12B. Nevertheless, in order to significantly improve the mechanical behaviour of the frame, at least 50% of the side surface 20 of the dividing element 2 contacts the internal surface 12 of the hollow tubular structure 1, and it is jointly connected thereto.

Accordingly, the dividing elements 2, independently from shape, thickness, material, position and angle, are bonded and rigidly and permanently joined to the tubular hollow structure 1.

In this manner, the diving elements 2 are permanently fixed to the hollow tubular structure 2 to be effective to the goal of this invention.

It should also be noted that the proper choice of specific areas in the tubular structure for the placement of the dividing elements modifies the bending and twisting curves of the sport equipment improving the performance.

The shape and the thickness of each dividing element can be different, also within the same equipment, depending on the tubular structure it connects to and the needed local reinforcement.

Each dividing element can be completely solid or with one or more through opening 21, as shown in Fig. 7. Different cases may occur in the same tubular structure depending on the needed reinforcement.

According to a preferred embodiment, the dividing elements 2 extends transversally to the longitudinal direction X defined by the hollow tubular structure 1. More preferably, as shown in Fig. 1A, the dividing elements 2 extends along a plane which is normal to said longitudinal direction X.

In any case, also different inclinations can be foreseen, as shown in Fig. 10.

In fact, each dividing element, to maximize its function, is preferably angled properly in the tubular structure depending on the tube shape and bending curve and to the stress to which the specific portion of the frame is subjected.

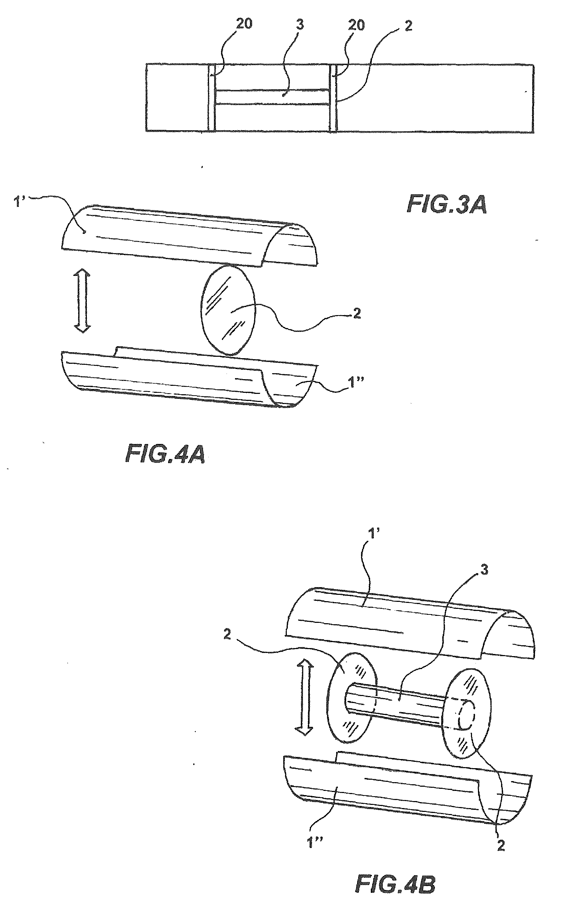

With reference now to Fig. 3, according to a preferred embodiment, two or more of the dividing elements 2 are interconnected therebetween by a connecting element 3.

The connecting element 3 can be formed by a single elongated member, as in the embodiment of Fig. 3.

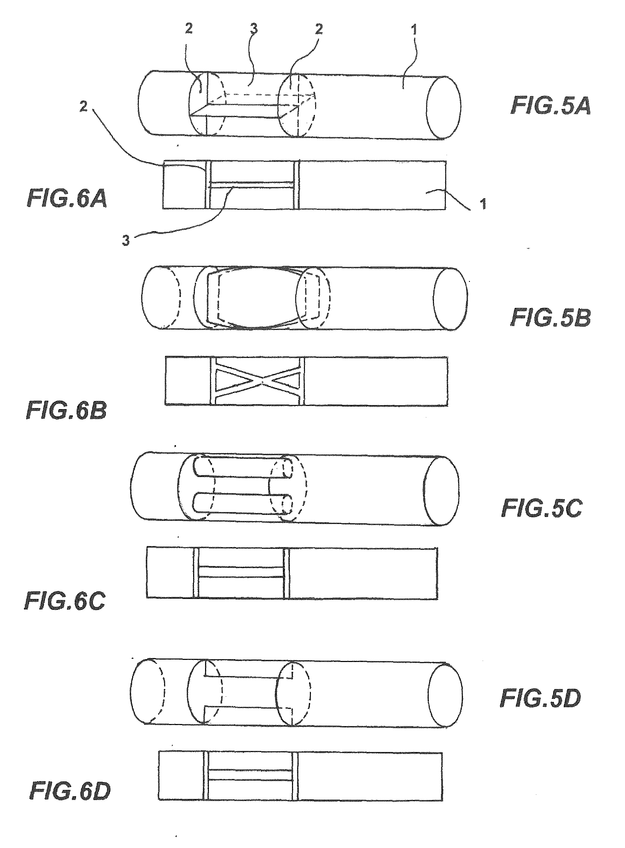

The forms and features of the connecting element depends on the tubular structure shape and on the bending curve thereof. Accordingly, two or more dividing elements can be connected along the longitudinal direction X of the structure 1 in different ways, similar to a spinal column or by flat surfaces or by helices in a DNA-like shape, in order to optimize the benefit of the reinforcement structure. Examples of such alternative embodiments of the connecting elements are shown in Figs. 5A-D and 6A-D.

It should also be noted that according to the present embodiment, the side surface 20 of the dividing element 2 wholly contacts the internal surface 12. In this manner, the hollow tubular structure 1 is divided into longitudinally separated hollow portions.

Fig. 7 shows also an alternative embodiment of the dividing element 2, in which the side surface 20 contacts the internal surface 12 only partially, i.e. at least 50% of the side surface contacts 20 the latter, as previously explained.

Furthermore, as shown in Figs. 8-9, the dividing elements 2 can also have different thickness and have partially concave or convex surfaces.

Dividing elements 2 can also have polyhedral shape with or without openings.

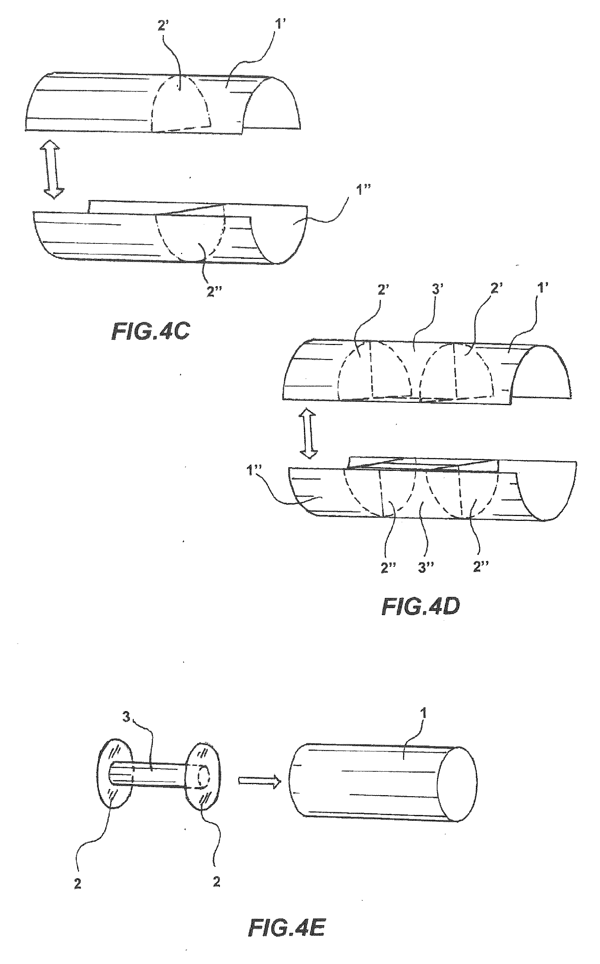

The hollow tubular structure 1 of the sport equipment of the present invention can be obtained according to various manufacturing methods, as shown in Figs. 4A-E.

According to a first embodiment, shown in Fig. 4A, the tubular structure can be made in two or more separate halves 1' and 1" and the dividing elements 2 are added during the bonding of these parts.

As previously explained the halves and the dividing elements, after bonding, are permanently and rigidly joined to form the improved tubular structure. Furthermore, the dividing element 3, when present, is fixed to the dividing element 2 before connecting the halves 1' and 1", as shown in Fig. 4B.

As an alternative, also the dividing elements can be divided in two separated parts 2' and 2" which are fixed in advance to each respective half of the tubular structure and successively bonded each other during the bonding process to form the tubular structure.

Similarly, also the connecting element 3 can be divided in two parts and bonded together with the dividing elements, as shown in fig. 4C

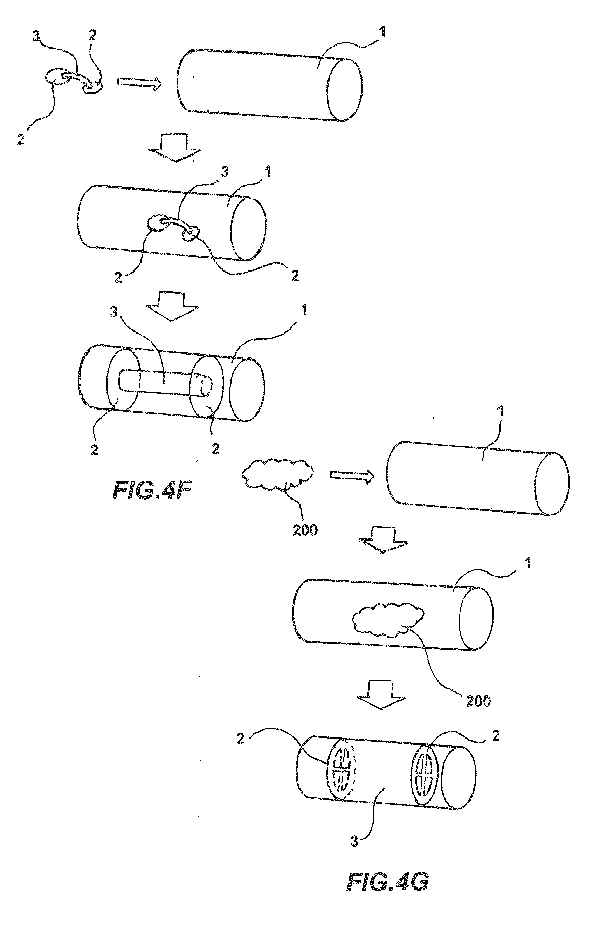

Fig. 4E shows a further alternative embodiment in which the dividing elements 2 are connected each other before the bonding to the tubular structure and then inserted in the tubular structure previously formed from one of the two ends and then bonded in position permanently. Figs. 4F and 4G shows a further alternative embodiment where the dividing elements are inserted in the hollow structure in a temporary shape and then formed to their definitive shape and bonded to the hollow structure. In particular, Fig. 4G shows an alternative wherein the dividing elements are made of composite material, which is inserted as a temporary body 200 in the hollow structure 1 and successively formed in its final shape.

In a further possibility, not shown in the Figures, the tubular structure can be built around the dividing elements.

It should also be noted that the material of each dividing element can be multiple and different from the ones used in the tubular structure and the other dividing elements within the same equipment, depending on the tubular structure, the needed local reinforcement and the specific goal.

A Finite Element Analysis have been performed to demonstrate the improvement this invention delivers, simulating, in a simplified configuration out of the many possible ones, the dynamic behaviour of a tubular structure with two or more dividing elements (each other connected or not) vs. the same tubular structure without any dividing element. The simulation considered different materials, with physical and mechanical characteristics similar to the ones of the materials normally used for the tubular sporting goods. The analysis results in a range of different values all indicating a reduced deformation, confirming the benefit of this invention. The invention described in this manner allows a number of advantages over conventional devices. In particular, each dividing element, properly positioned and designed, by limiting the deformation of the section near to the dividing element itself, reduces the deformation of the tubular structure. A reduction of the deformation of the tubular structure improves the flexural and torsional rigidity of the sport equipment.

With the use of this structure, for the same performance, it is possible, at least partially, to use cheaper materials, for example thermoplastic and/or extruded aluminium instead of thermoset composite or glass fibre instead of carbon fibre. Alternatively, with the use of this structure, for the same type of material, it is possible to improve the performance.

## Claims

1. A sport equipment (100) including a frame (10), wherein the frame (10) comprises a hollow tubular structure (1) and a plurality of rigid dividing elements (2) disposed within an internal volume (11) defined by the hollow tubular structure (1) in separated positions along a longitudinal direction (X) of the hollow tubular structure (1), the dividing elements (2) comprising a side surface (20) facing an internal surface (12) of the hollow tubular structure (1), **characterized in that** the dividing elements (2) extend between transversally opposed portions (12A, 12B) of the internal surface (12) and are rigidly connected to said opposed portions (12A, 12B).

2. The sport equipment (100) according to claim 1, wherein at least 50% of said side surface (20) contacts said internal surface (12) of the hollow tubular structure (1) and is connected thereto.

3. The sport equipment (100) according to claim 1 or 2, wherein the dividing elements (2) are substantially flat-shaped.

4. The sport equipment (100) according to any of the preceding claims, wherein the dividing elements (2) extend transversally to the longitudinal direction (X).

5. The sport equipment (100) according to any of the preceding claims, wherein the dividing elements (2) comprises one or more through opening (21).

6. The sport equipment (100) according to any of the preceding claims, wherein two or more of the dividing elements (2) are interconnected therebetween by a connecting element (3).

7. The sport equipment (100) according to claim 6, wherein the connecting element (3) extends substantially parallel to said longitudinal direction (X).

8. The sport equipment (100) according to any of the preceding claims, wherein the side surface (20) wholly contacts said internal surface (12).

9. The sport equipment (100) according to any of the preceding claims, wherein the dividing elements (2) divide the hollow tubular structure into longitudinally separated hollow portions.

10. The sport equipment (100) according to any of the preceding claims, wherein the sport equipment is selected from the group consisting of: sticks, bats, pools, rods, shafts, racquets, handles, tackles, clubs, bails, oars, bike frames, forks, handle bar, seat post and other bike components, archery bows' components and sailing masts.
